# EUROPÄISCHE PATENTSCHRIFT

(11) **EP 1 069 984 B1**
(45) Veröffentlichungstag und Bekanntmachung des Hinweises auf die Patenterteilung: **09.10.2002**
(21) Anmeldenummer: 99913199.8
(22) Anmeldetag: 27.02.1999
(51) Int. Cl.: B29C 65/16

(54) **VERFAHREN ZUM VERSCHWEISSEN VON LAMINATFÖRMIGEN VERPACKUNGSMATERIALIEN**
METHOD FOR WELDING LAMINATE-LIKE PACKAGING MATERIALS
PROCEDE POUR SOUDER DES MATERIAUX D'EMBALLAGE SE PRESENTANT SOUS FORME DE STRATIFIES

(30) Priorität: 07.04.1998 DE 19815439
(43) Veröffentlichungstag der Anmeldung: 24.01.2001
(73) Patentinhaber: Tetra Laval Holdings & Finance S.A., 1009 Pully (CH)
(72) Erfinder: MARTIN, Peter, Josef, D-65205 Wiesbaden (DE); PÜTZ, Heidrun, D-52074 Aachen (DE); TREUSCH, Hans, Georg, D-52074 Aachen (DE)
(74) Vertreter: Weber, Dieter, Dr.
(86) Internationale Anmeldenummer: EP9901296
(87) Internationale Veröffentlichungsnummer: WO99051421

(56) Entgegenhaltungen:
- EP-A- 0 126 787
- EP-A- 0 131 918
- EP-A- 0 147 833
- EP-A- 0 237 192
- WO-A-89/10231
- WO-A-97/47796
- DE-A- 4 409 255
- US-A- 4 156 626
- US-A- 4 322 464
- US-A- 4 353 770
- US-A- 4 714 509
- US-A- 5 690 775
- PATENT ABSTRACTS OF JAPAN vol. 016, no. 157 (M-1236), 16. April 1992 -& JP 04 009290 A (SHARP CORP), 14. Januar 1992

## Beschreibung

Die Erfindung betrifft ein Verfahren zum Verschweißen von laminatförmigen Verpackungsmaterialien, die auf den miteinander zu verschweißenden Oberflächen Kunststoff aufweisen, ohne Berührung der Oberflächen mit Schweißwerkzeugen unter Verwendung von Laserstrahlung als Schweißenergie, wobei die zu verschweißenden Oberflächen als Materialbahnen relativ zu der ortsfesten Auftreffstelle der Laserstrahlung auf die wenigstens eine Materialbahn bewegt werden.

Es sind Packungsmaschinen zur Herstellung von Flüssigkeitspackungen, insbesondere zum Verpakken flüssiger Lebensmittel, wie zum Beispiel Milch, Saft und dergleichen, bekannt, bei denen ein Verfahren der eingangs genannten Art eingesetzt wird. Zur Herstellung und zum Befüllen und Verschließen solcher Fließmittelpackungen ist es bekannt, als Verpackungsmaterialien bahnförmige Laminate zu verwenden, bei denen Papier als Trägermaterial dient, welches auf beiden Oberflächen der Laminatbahn mit Kunststoff beschichtet ist. Von einer Rolle wird diese Verpackungsbahn mit intermittierendem Vorschub (für die Herstellung der Siegelnähte) abgezogen, zu einem Tubus geformt, bei welchem die Ränder überlappend zur Bildung der Längssiegelnaht miteinander verschweißt werden. Dieses Verschweißen erfolgt mittels Heißluft, welche berührungslos die Verpackungsbahn an dem einen zu verschweißenden Rand auf Schweißtemperatur von etwa 120-150° erwärmt. Die so erweichte Kunststoffbeschichtung erzeugt durch Andruck auf den anderen Rand der Packungsbahn eine Längssiegelnaht unter Bildung eines flüssigkeitsdichten Tubus. Dieser wird nachfolgend gefüllt, querversiegelt und endgeformt.

Das Verschweißen der Längsnaht mittels Heißluft erfolgt unmittelbar vor dem Befüllen der Packung. Ein längliches Heizelement bläst Heißluft über eine bestimmte Länge des Vorschubes direkt auf die Materialbahn, wobei mit Nachteil dieser Luftstrahl diffundiert und die Umgebung derart aufheizt, daß der weitaus überwiegende Teil der erzeugten Wärme als Veriustwärme verlorengeht und die Effizienz dieses Schweißverfahrens bei nur etwa 2% liegt.

Die Verwendung von Heißluft als Energieträger erfordert mit weiterem Nachteil eine ausreichende Vorwärmphase der Maschine bei anlaufender Produktion. Jeder Zwischenhalt der Packungsmaschine führt aufgrund der trägen Steuerung der Energieeinbringung durch Heißluft zu fehlerhaften Packungen, weil der Tubus nicht eine ausreichend feste Längssiegelnaht erhielt. Die Naht platzt auseinander, und das flüssige Lebensmittel tritt innerhalb der Maschine aus der Packung aus und bedingt unerfreuliche Verschmutzungen. Bis ein stabiler Betriebszustand mit einwandfrei flüssigkeitsdichten Packungen erreicht ist, wird beim Verschweißen mittels Heißluft eine lange Vorlaufzeit benötigt. Ein kurzzeitiges Ein- und Ausschalten einer derart betriebenen Packungsmaschine ist nur mit erheblichen Verlusten möglich. Diese Probleme eskalieren erst recht im Falle einer aseptischen Verpackung. Die Verhältnisse der erwähnten Vorlaufzeit und dergleichen sind außerdem nicht reproduzierbar, weil die Umgebung der Schweißstelle von den Tages- und Jahreszeiten unterschiedlich warm ist. Auch das Alter einer Heißluftpatrone trägt zu der mangelhaften Reproduzierbarkeit beim Ein- und Ausschalten der Maschine bei.

Es sind auch andere Verfahren zum Verschweißen von Iaminatförmigen Verpackungsmaterialien der eingangs genannten Art bekannt, bei denen zum Beispiel in einer Packungsmaschine der vorstehend beschriebenen Art die Quersiegelnaht mit Hilfe von Induktionswärme hergestellt wird. Der Hauptnachteil dieses Schweißverfahrens besteht darin, daß das Verpackungsmaterial eine Metallschicht für die Erzeugung von Induktionswärme aufweisen muß. Hier wird bei herkömmlichen Verpackungen häufig Aluminium verwendet. Materialien ohne diese Aluminiumschicht können aber nicht mit dem Induktionsverfahren verschweißt werden. Mit weiterem Nachteil wird mit dem Induktionsverfahren die Energie nicht auf direktem Wege eingebracht, und die Dichtenergie ist in einem Punkt im Millimeterbereich nicht hoch genug, so daß - ähnlich wie bei dem Erwärmen mittels Heißluft - die Energie über eine bestimmte Länge der Verpackungsmaterialbahn eingebracht wird. Bei kurzzeitigem Ein- und Abschalten (Kurzstop) ergibt sich hier wieder je nach der Länge der Energieeinbringung mit Nachteil erheblicher Ausschuß.

Ein Verfahren zum Verschweißen von laminatförmigen Verpackungsmaterialien der eingangs genannten Art ist in ähnlicher Weise in der US-A-5 690 775 beschrieben. Dort geht es um die Formung des Strahlquerschnittes eines zur Verschweißung verwendeten Laserstrahls. Dazu wird ein in den Strahlengang gebrachtes optisches Element verwendet, das eine gleichmäßige Intensitätsverteilung erzeugt. Der dort eingesetzte Laser gibt einen gaußförmigen Strahl ab, der mittels fokussierendem Spiegel oder Beugungsgitter in einen Strahl mit gleichmäßiger Energieverteilung umgeformt wird. Der Einsatz solcher dispersiven Elemente führt zu einem komplexen Aufbau, für dessen Herstellung und Betrieb ein gewisser unwirtschaftlicher Mindestaufwand nicht unterschritten werden kann.

Aus der EP-A-0 126 787 wird ein Verfahren zum Laserschweißen beschrieben, bei welchem Kunststoff optimiert wird. Es wird nämlich die Wechselwirkung zwischen der eingestrahlten Laserenergie und der Absorption im thermoplastischen Material optimiert. Bei dem bekannten Verfahren ist der Einsatz geeigneter Additive beschrieben, wie z.B. Ruß oder reflektierende Metallpartikel, welche dem zu verschweißenden Kunststoff zugesetzt werden müssen. Dadurch soll die Umwandlung der Laserstrahlung in Wärme intensiviert werden. Durch Metallschuppen wird eine Mehrfachreflexion mit jeweiliger Absorption innerhalb des Kunststoffes erzielt. Die in dem Material absorbierte Energie soll erhöht werden, entweder durch einfache Erhöhung der optischen Absorption mittels Pigmenten oder durch Verlängern des Lichtweges im Material. Diese Maßnahmen kommen aber für Lebensmittelanwendungen nicht in Frage, da man anderenfalls zuvor eine separate Materialzulassung beantragen und genehmigt bekommen müßte. Bei einem solchen Verfahren könnten also Verpackungen für Lebensmittel nicht verschweißt werden.

Auch die WO 8910231 A beschreibt ein Verfahren zum Verschweißen von aus thermoplastischem Kunststoff bestehenden Werkstücken mittels Laserstrahlung. Letztere wird auf die Fügestelle gerichtet und mit einer solchen Energiedichte angewendet, daß der aufschmelzbare Kunststoff durch Energieabsorption im Bereich der Fügestelle aufschmilzt und ineinanderfließt. Um die gesamte Strahlungsenergie zum Aufschmelzen auszunutzen, erfolgt die Werkstückbestrahlung im Sinne vollständiger Energieabsorption ausschließlich durch Werkstoffvolumen der Werkstücke. Man will mit Lasern kleiner Leistung arbeiten und einen Energieverlust ausschließen. Zur Erhöhung der im Material absorbierten Leistung werden wiederum Additive vorgeschlagen, die mit den gleichen Nachteilen behaftet sind, wie vorstehend schon erwähnt. Bei einer anderen Ausführungsform wird eine Auswahl der Wellenlänge der Laserstrahlung vorgeschlagen; bei einer anderen Ausführungsform auch der streifende Einfall des Laserstrahles. Vor allem wird auf die Verwendung von reflektierenden "Leitblechen" abgehoben, welche das Licht zurück in das Material reflektieren sollen. Solche Reflexionselemente sind unerwünscht und führen zu einem erheblichen Aufwand, wobei die Anlage im Betrieb sogar verstärkt Störungen unterworfen ist. Eine hohe Leistung einer Packungsherstellungsmaschine ist damit kontinuierlich kaum zu betreiben.

Nach der WO 97/47796 A werden zwar Diodenlaser im optischen Bereich oder im nahen Infrarotbereich vorgeschlagen. Man verwendet aber wieder Pigmente zur Absorptionserhöhung, deren Nachteile vorstehend schon erwähnt sind. Die aus dieser WO-Veröffentlichung bekannten Maßnahmen dienen der Herstellung eines Netzes aus Kunststoffstreifen durch punktweises Verschweißen. Es wird auch eine gepulste Strahlung zur Erzeugung kurzer, verschweißter Linienstücke beschrieben. Dieses ist zur Herstellung von Verpackungen nicht geeignet. Hinweise auf die Durchführung eines kontinuierlichen Betriebes, bei dem man eine lange Schweißnaht erzeugt, werden nicht gegeben.

Die klassischen Laser zeichnen sich alle dadurch aus, daß sich das Lasermedium in einem aus hochpräzise zu justierenden Spiegeln zusammengesetzten Resonator befindet. Daher sind sie mechanisch sehr empfindlich.

Der Erfindung liegt daher die Aufgabe zugrunde, das eingangs erwähnte Verfahren zum Verschweiβen von Iaminatförmigen Verpackungsmaterialien mittels Laserstrahlung derart auszugestalten, daß die Wärmeenergie zur Erzielung der Schweißtemperatur mit wirtschaftlich vertretbarem Aufwand erzeugt werden kann und die kontinuierliche Herstellung einer Längssiegelnaht bei Steigerung der Maschinenleistung mit Eignung auch für Lebensmittelverpackungen möglich ist.

Gelöst wird diese Aufgabe gemäß der Erfindung dadurch, daß die Laserstrahlung eine kontinuierliche Ausgangsleistung hat, daß die Materialbahnen Verpackungsmaterialbahnen sind, für die Erzeugung der Laserstrahlung zum Verschweißen der Verpackungsmaterialien wenigstens ein und vorzugsweise eine Gruppe von nebeneinander angeordneten Diodenlasern eingesetzt wird und die Laserstrahlung dem Verpackungsmaterial als Freistrahl mittels fester Optik über Fenster und/oder mittels Lichtwellenleiter zugeführt wird.

Vorteilhafte Weiterbildungen der Erfindung sind Gegenstand der abhängigen Ansprüche.

In Frage kommen als Verpackungsmaterialien mit Kunststoffen beschichtetes Papier als Trägermaterial, mit Kunststoff beschichtete Materialien und gegebenenfalls, wenngleich hier nicht bevorzugt ins Auge gefaßt, Kunststoffolien ohne andere Trägermaterialien. Laminatförmig sind die Verpackungsmaterialien durch die Beschichtung mit Kunststoff bzw. durch das Aufeinanderlegen unterschiedlicher Materialien der vorstehend erwähnten Art, zum Beispiel Metall mit Kunststoff, Papier mit Metall und Kunststoff usw. Die Verpackungsmaterialien können in Form von Platten, Bögen oder Bahnen vorliegen und in dieser Form mit dem erfindungsgemäßen Verfahren auf den Seiten miteinander verschweißt werden, von denen wenigstens eine mit Kunststoff beschichtet ist. Schweißbacken oder dergleichen sind bei dem neuen Verfahren nicht notwendig, die Energie wird vielmehr direkt auf optischem Wege eingebracht mit dem Vorteil, daß auf diese Weise auch aseptische Packungen steril befüllt und verschlossen werden können. Eine einmal erzeugte Sterilität wird durch das Schweißverfahren gemäß der Erfindung nicht gestört.

Das erfindungsgemäße Schweißverfahren ist von in dem Laminat befindlichen Metallfolien unabhängig.

Die Strahlform und die Leistungsverteilung des Strahles an der Schweißstelle können so eingestellt werden, daß der Energiebedarf der die Schmelztemperatur erzeugenden Laser geringer als der bisher bekannten Wärmequellen ist. Wie nachfolgend noch ausführlicher erläutert wird, gelingt eine Verlustreduzierung durch den Einsatz von Lasern gegenüber dem Heißluftverfahren auf bis zu 50%.

Durch Anwendung des erfindungsgemäßen Verfahrens kann die Laserstrahlung mit einer derartigen Energiedichte auf wirtschaftlich vertretbare Weise hergestellt werden, daß auf diese Weise ein kontinuierlicher Betrieb einer Verpackungsmaschine gewährleistet ist. Durch den Einsatz von Lasern zur Erzeugung der die Wärme an der Schweißstelle erzeugenden Energie vereinfacht sich das Schweißaggregat in der Gesamtmaschine. Dabei ist es bevorzugt, die Materialbahn mit gleichförmiger Vorschubgeschwindigkeit relativ zu der Auftreffstelle zu bewegen. Auf diese Weise kann man eine Längssiegelnaht kontinuierlich erzeugen und dadurch die Leistung der Packungsmaschine steigern. Setzt man die Laserleistung zu der Vorschubgeschwindigkeit der Materialbahn ins Verhältnis, dann kann man dieses als die Streckenenergie E definieren, die zum Beispiel in J/cm angegeben werden kann. Die Streckenenergie E charakterisiert den Schweißprozeß. Wählt man Vorschubgeschwindigkeiten etwa im Bereich zwischen 10 und 25 m/min, so hat man bei der hier betrachteten Laserstrahlung keine Verluste durch Wärmeleitung aus dem Bereich der Schweißnaht. Untersuchungen haben vielmehr gezeigt, daß der Zusammenhang zwischen der Laserleistung und der Vorschubgeschwindigkeit eine Steuerung oder auch Regelung beim Anfahren der Maschine nach einem vorübergehenden Anhalten ermöglicht Besonders bevorzugt hat sich eine Vorschubgeschwindigkeit von 24 m/min für die Bewegung der Materialbahn an der ortsfesten Auftreffstelle der Laserstrahlung (Schweißstelle) herausgestellt.

Die Laserstrahlung kann abrupt ein- und ausgeschaltet werden, wobei die Temperatur des zu erwärmenden Kunststoffes auf der Oberfläche des Verpackungsmateriales ebenso abrupt wieder die Schmelztemperatur erreicht, wie der Laser eingeschaltet wird. Dadurch entstehen durch die bisweilen unvermeidlichen Unterbrechungen bei Verpackungsherstellungsmaschinen keine Löcher oder unverschweißte Randbereiche des Packungstubus, so daß mithin Ausschuß nach dem Anfahren einer zuvor abgeschalteten Packungsmaschine praktisch nicht erzeugt wird.

Ohne aufwendige mechanische Mittel, ohne Reflexionselemente und auch ohne die unerwünschten Additive kann das Verfahren bei Maschinen eingesetzt werden, die sich auch für Lebensmittel eignen. Es kann eine kontinuierliche Längssiegelnaht hergestellt werden, die gegebenenfalls auch eine Regelung der relevanten Betriebsparameter gestattet. Unter Einwirkung der Laserstrahlung kann eine PE-Schicht, die jeweils die äußere Schicht des Verpackungslaminates bildet, aufgeschmolzen werden.

Grundsätzlich könnten entsprechend der vorstehend erwähnten Lehre, Laserstrahlung schlechthin als Schweißenergie zu verwenden, verschiedene Lasersysteme eingesetzt werden. Bekannt sind CO₂-Laser, Nd:YAG-Laser und die erwähnten Diodenlaser, die grundsätzlich alle zur Erzeugung der notwendigen Schweißenergie verwendet werden können. CO₂-Laser haben eine gute Strahleinkopplung und eine gute Bestrahlungsabsorption. Man muß für diese aber das Gas für den Betrieb des Lasers zur Verfügung stellen, den nicht unerheblichen Raumbedarf berücksichtigen und einen bisweilen hohen Preis bezahlen; Nachteile, die bei manchen Anwendungen den Einsatz von CO₂-Lasern ausschließen. Die Nd:YAG-Laser und die erfindungsgemäß vorgeschlagenen Diodenlaser emittieren aber beide eine ähnliche Wellenlänge im nahen Infrarot. Sie haben außerdem den Vorteil, daß nicht unbedingt eine Spiegeloptik für die Strahleinkoppelung erforderlich ist. Der Wirkungsgrad von der elektrisch zugeführten Leistung zur optisch abgegebenen Leistung beträgt nun aber bei den Nd:YAG-Lasern nur 5%, während der Wirkungsgrad der Diodenlaser bei 45% liegt. Der erfindungsgemäß empfohlene Einsatz von Diodenlasern hat weder das Erfordernis, daß man ein zusätzliches Gas oder anderes Medium zum Betrieb des Lasers zur Verfügung stellen muß, sondern hat auch den Vorteil, daß sie räumlich klein sind. Durch die Wellenlänge der von dem Diodenlaser emittierten Strahlung ist auch der erreichte Absorptionskoeffizient annehmbar groß. Mit weiterem Vorteil erzeugt der Diodenlaser selbst bereits eine linienförmige Strahlung, die ersichtlich ohne Strahlformung einfacher als bei anderen Lasertypen in die Schweiß- bzw. Fügezone auf eine Linie übergeführt werden kann. Wenn die Laserstrahlung an ihrer Auftreffstelle auf die Oberfläche der Verpackungsmaterialbahn linienförmig ist, kann man ersichtlich bei Bewegen der Materialbahn senkrecht zu dieser Linie die Schweißnaht mit gewünschter Breite erzeugen, wobei die Länge der Linie die Schweißnahtbreite bestimmt.

Im Gegensatz zu den empfindlichen Spiegeln der bekannten CO₂-Laser bringen Diodenlaser ihre Resonatorspiegel gewissermaßen schon mit, die Reflexion des Laserlichts erfolgt hier nämlich an der Grenzfläche zwischen Halbleiterkristall und Luft. Da sich daher nichts dejustieren kann - die Geometrie wird bei der Herstellung der Laserdiode ein für allemal festgelegt - sind solche Systeme mechanisch viel unempfindlicher und zudem erheblich kleiner. Eine Laserdiodenmatrix hat mit überraschendem Vorteil Lateralabmessungen von typischerweise wenigen Zentimetern.

Die linienförmig gebündelte Energie des Diodenlasers kann man Vervielfachen, wenn man anstelle eines Lasers eine Gruppe von Diodenlasern einsetzt. Es entsteht dadurch ein sogenanntes Lasermodul. Bei einer bevorzugten Ausführungsform besteht dieses aus zehn Hochleistungsdioden, die in einem Stapel zusammengefaßt sind und eine zehnfach höhere optische Strahlungsleistung erbringen. Bei einer Stromstärke von 50 A erreicht man auf diese Weise Strahlungsleistungen von 400 W.

Mittels einer Optik kann bei einer anderen bevorzugten Ausführungsform die von den Dioden emittierte stark divergente Strahlung in vertikaler Richtung kollimiert werden. Die kollimierten Einzelstrahlen bilden ein Strahlenbündel, das durch geeignete optische Mittel zum Beispiel auf eine Linie von 0,8 x 8 mm fokussiert wird.

Setzt man bei einer vorteilhaften Ausführungsform eine Produktionsgeschwindigkeit einer bewegten Bahn von 24 m/min ein, dann kann man mit einer Laserleistung von über 400 W einen linienförmigen Strahl an der Schweißstelle erreichen.

Sollte der Laserstapel in einer Entfernung von der Schweißstelle untergebracht sein, dann kann die Strahlungsenergie mittels Lichtleitfasern an die Schweißstelle herangebracht werden.

Wenn ferner gemäß der Erfindung die Laserstrahlung dem Verpackungsmaterial als Freistrahl mittels fester Optik über Fenster und/oder mittels Lichtwellenleiter zugeführt wird, erfolgt das Zuführen wieder berührungslos, und das Verpackungsmaterial wird in keiner Weise chemisch beeinträchtigt, weil keine Fremdstoffe mit der Schweißstelle in Berührung kommen. Ein Fenster hat dann einen großen Vorteil, wenn Verpackungsmaterialien in einem Reinraum oder einem sterilen Raum verschweißt werden sollen. Die Schweißenergie kann unproblematisch außerhalb des sterilen Raumes erzeugt und über das Fenster in den sterilen Raum eingekoppelt werden. Durch die erfindungsgemäße Lehre erhält man eine problemlose Strahlführung in das betreffende Maschinenelement hinein. Bei einem CO₂-Laser ist die Strahlführung nicht ganz so günstig wie bei Einsatz eines Diodenlasers, denn es wird bei dem CO₂-Laser im allgemeinen ein Strahl mit rundem Querschnitt erzeugt, welcher in eine Linie umgeformt werden muß. Der Diodenlaser hingegen benötigt eine solche Strahlformung nicht, so daß die feste Optik vereinfacht werden kann mit dem Vorteil einer optimalen Handhabung.

Die Erfindung ist zweckmäßig weiter dadurch ausgestaltet, daß der Laserstrahl unter einem Einfallswinkel ≠ 0° auf die wenigstens eine Oberfläche des Verpackungsmaterials auftrifft. Um den für das Verschmelzen verwendeten Kunststoff auf Schmelztemperatur erwärmen zu können, muß die Energie der Laserstrahlung im Kunststoff absorbiert werden. Die Absorption ihrerseits ist von verschiedenen Faktoren abhängig: zum Beispiel von der Art des Mediums, im vorliegenden Falle also des Kunststoffes, in welchem die Laserstrahlung absorbiert werden soll. Jeder Kunststoff hat einen dem Material eigenen Absorptionskoeffizienten α. Ferner hängt die Absorption von der Dicke des Materials, von der Wellenlänge λ der Laserstrahlung und von dem Einfallswinkel ab, unter welchem die Laserstrahlung auf die Oberfläche des Mediums trifft, im vorliegenden Fall also auf die Oberfläche des Kunststoffmaterials. Der absorbierte Anteil der Strahlung kann ausgedrückt werden als 1 - e^{-αz}.

Für die in Rede stehenden Kunststoffmaterialien als Beschichtung von Verpackungslaminaten werden unterschiedliche Dicken verwendet, die vorzugsweise im Bereich von 5 - 40 µ des vorzugsweise Polyethylen aufweisenden Kunststoffes liegen. Soll die Absorption in einer Kunststoffschicht der unteren Grenze absorbiert werden, d.h. auf einer Strecke von nur 5 µm oder 7 µm, was in der Praxis gängig ist, dann würde bei einem Einfallswinkel von 0°, d.h. also senkrecht auf die Oberfläche des Kunststoffes auftretende Laserstrahlung, eine ausreichende Absorption nicht erfolgen.

Zwar kann man bei der Auswahl des richtigen Lasersystems Laser finden, welche eine günstige Wellenlänge λ emittieren. Mit einem großen Absorptionskoeffizienten α und dadurch einer ermöglichten kleinen Eindringtiefe der Laserstrahlung erreicht man mit dem CO₂-Laser eine hohe Absorption bei Wellenlängen von λ > 2500 nm. Häufig sind in der Praxis aber Umstände gegeben, welche die oben erwähnten Nachteile des CO₂-Lasers so gravierend erscheinen lassen, daß CO₂-Laser nicht immer einsetzbar sind. Die in Rede stehenden Kunststoffmaterialien enthalten insbesondere häufig Wasser, das in nebelhafter Tröpfchenform beim Schweißen verdampft und die Strahlung des CO₂-Lasers erheblich stört.

Andererseits ist eine kontinuierliche Ausgangsleistung des betreffenden Lasers bevorzugt, so daß man unter den vorhandenen Lasersystemen die Festkörperlaser auswählt, also sowohl die Nd:YAG-Laser als auch die Diodenlaser. Erstere emittieren eine Wellenlänge λ von 1,064 µm, und die Diodenlaser emittieren eine Wellenlänge, die etwa im Bereich von 800 - 980 nm liegt.

Man erkennt aus dem oben definierten absorbierten Anteil = 1 - e^{-αz}, daß bei dem materialbedingten, festen Absorptionskoeffizienten α eine Variations- und Verbesserungsmöglichkeit bei Veränderung der Absorptionslänge z besteht. Um das insbesondere bei den vorzugsweise verwendeten Diodenlasern schlechtere λ (Wellenlänge) auszugleichen, ist man bestrebt, die Absorptionslänge z zu vergrößern. Dies gelingt erfindungsgemäß durch das Einführen eines Einfallswinkels # 0°. Mit anderen Worten soll die Laserstrahlung nicht senkrecht sondern schräg auf die Oberfläche des Kunststoffes auftreffen, weil dann die Absorptionsl änge um ein Vielfaches vergrößert werden kann. Dadurch erreicht man wieder eine hohe Absorption, die im Bereich von 80 - 90% liegen kann. Wenn man durch richtige Auswahl der Absorptionsl änge und damit richtige Auswahl des Einfallswinkels die Laserstrahlung über eine ausreichend lange Strecke in dem Kunststoffmaterial laufen lassen kann, wird die gewünschte Absorption erreicht und die für das Schmelzen erforderliche Temperatur erzeugt.

Besonders bevorzugt ist es dabei, wenn erfindungsgemäß der Einfallswinkel im Bereich von 45° bis 84°, vorzugsweise im Bereich von 75° bis 83° und ganz besonders bevorzugt bei 81° liegt.

Die Auswahl der vorgenannten Größen für den Einfallswinkel ist keineswegs selbstverständlich. Der Fachmann wird beim Einsatz eines Lasers immer feststellen, daß die Laserstrahlung eine gewisse Austrittsöffnung hat bzw. daß der Laserstrahl einen Öffnungswinkel hat. So stellt die obere Bereichsgrenze des Einfallswinkels von 84° einen Maximalwert dar, weil dieser dem halben Öffnungswinkel der Laserstrahlung oder der numerischen Apertur NA entspricht. Durch die angegebenen Größen lehrt die Erfindung den Einsatz von Einfallswinkeln für die Laserstrahlung, die in der Praxis erreicht werden können und zu guten Absorptionswerten führen.

Diese recht gute Absorption wird mit den bevorzugt einzusetzenden Diodenlasern mit kontinuierlicher Ausgangsleistung erreicht. Der Kunststoff hat auch eine hohe Absorption für Wellenlängen λ < 300 nm. Es gibt zwar Laser, die in diesem Wellenlängenbereich emittieren, eine ausreichende Leistung von zum Beispiel einigen Hundert Watt kann dort aber nur durch gepulste Strahlung erreicht werden, und dies schränkt die Anwendung der erfindungsgemäßen Lehre derart ein, daß die zuletzt erwähnte kleine Wellenlänge außer Betrachtung bleiben sollte.

Die Erfindung ist weiterhin vorteilhaft dadurch ausgestaltet, daß die Leistungsverteilung im Strahlquerschnitt so eingestellt wird, daß sie um den Mittelpunkt der an der Auftrittstelle abgebildeten Linie asymmetrisch ist.

Untersuchungen zeigen, daß die Energie im Strahlquerschnitt entlang der abgebildeten bzw. fokussierten Linie an der Schweißstelle in Form einer Gauß'schen Kurve verteilt ist. Die Breite dieser Gauß'schen Kurve oder Glockenkurve hängt von der Länge der fokussierten Linie ab, die bei einer praktischen Ausführungsform 18 mm betrug. Die Leistungsverteilung im Strahlquerschnitt entspricht der Energieverteilung, die man darstellen kann, wenn man über der Koordinate entlang des Linienfokus [in mm] die Energiedichte Eₛ [in J/cm²] aufträgt. Das Maximum liegt in der Mitte der abgebildeten Linie, und die Gauß'sche Kurve ist gewöhnlich zu diesem Mittelpunkt symmetrisch. Für eine bestimmte Temperatur benötigt man eine bestimmte Energiedichte, die sich also durch den Wert der Koordinate ergibt. Die Höhe der Koordinate entspricht sozusagen einer Erweichungs- bzw. Fügetemperatur, bei welcher die Laminatoberflächen miteinander verschweißt werden können.

Legt man die Leistungsverteilung asymmetrisch aus, wie vorstehend bei einer zweckmäßigen Weiterbildung empfohlen wird, dann kann ortsabhängig entlang dem Linienfokus an der einen Stelle eine höhere Temperatur und im Abstand daneben eine niedrigere Temperatur zum Verschweißen erreicht werden. Dies ist für denjenigen Fall vorteilhaft, wenn zum Beispiel unterschiedliche Materialien miteinander zu verschweißen sind. Gerade bei der Herstellung einer Längssiegelnaht zur Bildung eines Verpackungstubus spielt dieses Verfahren dann eine Rolle, wenn im Inneren des Verpackungstubus ein Kantenschutzstreifen aus einer dünnen Kunststoffolie gleichzeitig mit Erstellung der Längssiegelnaht aufgeschweißt werden soll. Es versteht sich dann, daß die Laminatbahn selbst mit einem Überlapp von zum Beispiel 7,5 mm bei einer anderen Temperatur verschweißbar ist als der daneben befindliche Kunststoff-Kantenschutzstreifen. Dieser hat zwar eine Breite von 7 mm, ist aber mit einem Überstand von 3 mm auf der inneren Laminatseite aufgeschweißt, wobei auch dieser Überstand von 3 mm zusätzlich zu dem erwähnten Überlapp von 7,5 mm mit dem erfindungsgemäßen Verfahren verschweißt werden soll. Im einen Falle wird ein Laminat mit einem Laminat und in dem benachbarten anderen Falle eine reine Kunststoffolie mit dem Laminat verschweißt.

Vorteilhaft ist es gemäß der Erfindung ferner, wenn die Leistungsverteilung im Strahlquerschnitt rechteckförmig ist. Diodenlaser haben eine homogene Energieverteilung, welche der besprochenen Leistungsverteilung entspricht, die sich als ein Rechteck mit gewünschter Höhe und Breite einstellen läßt. Der Prozeßwirkungsgrad ist entsprechend der erfindungsgem äßen Lehre bei der Rechteckform hoch, denn es entfallen Verluste, die sich bei der Darstellung der Energiedichte über der Koordinate des Linienfokus bei einer Gauß'schen Verteilung durch diejenigen Flächen ergeben oder darstellen lassen, welche außerhalb des Rechteckes liegen. Zum Verschweißen von Polyethylen hat es sich bei einer praktischen Ausführungsform ergeben, daß die zum Verschweißen notwendige Energiedichte bei 6 J/cm² liegt (Höhe des Rechteckes).

Zum besseren Verständnis kann man die Gauß'schen Kurven oder auch das erwähnte Rechteck als Temperaturverteilung quer zu der Schweißnaht interpretieren.

Zweckmäßig ist es gemäß der Erfindung weiterhin, wenn die Temperatur in der Fügezone, d.h. an der Schweißstelle, erfaßt und damit die Laserleistung ausgesteuert wird. Mit Vorteil kann man so die Temperatur in der Fügezone konstant halten. Das Erfassen der Temperatur kann man berührungslos mit Hilfe eines Strahlungspyrometers vornehmen. Dieses liefert ein der Temperatur proportionales Signal, und mit diesem kann man die Leistung des Lasers aussteuern.

Dabei hat es sich als weiterhin vorteilhaft erwiesen, die Laminatbahn zum Beispiel durch Heizstrahler vorzuwärmen, wobei sich bei einem speziellen Beispiel 80° C als Vorwärmtemperatur als günstig erwiesen hat. Es hat sich gezeigt, daß im Vergleich zu einer Laminatbahn mit Raumtemperatur bei einer Aufheizung auf 80° C die Laserleistung, die zum Schweißen benötigt wurde, um 25% verringert werden konnte.

Gemäß der Erfindung ist es auch günstig, wenn die Steuerung der Laserleistung mit Hilfe der Vorschubgeschwindigkeit erfolgt. Nach dieser Verfahrensvariante wird die Vorschubgeschwindigkeit aufgenommen, und mit den sich daraus ergebenden Signalen wird die Leistung der Laser gesteuert. Versuche haben je nach dem Strahleinfallswinkel Abhängigkeiten der Laserleistung von der Vorschubgeschwindigkeit ergeben. Mit Hilfe dieser Abhängigkeiten oder Beziehungen läßt sich bei einer Veränderung der Vorschubgeschwindigkeit, wie zum Beispiel beim Anfahren der Packungsmaschine, die Strahlungsleistung regeln.

Weitere Vorteile, Merkmale und Anwendungsmo glichkeiten der vorliegenden Erfindung ergeben sich aus der folgenden Beschreibung bevorzugter Ausführungsbeispiele in Verbindung mit den anliegenden Zeichnungen. Bei diesen zeigen:
- Figur 1: perspektivisch eine quaderfö rmige Flüssigkeitspackung mitteilweise herausgebrochenen Seitenwänden,
- Figur 2: eine vergrößerte, abgebrochene Querschnittsansicht, wobei die Schnittebene in Richtung der gezeigten Pfeile in Figur 1 liegt,
- Figur 3: perspektivisch den Gesamtverlauf der Materialbahn, von der Rolle bis zur hergestellten Verpackung, wobei nur wenige Teile der Maschine ohne Rahmen und Halterung dargestellt sind,
- Figur 4: perspektivisch und abgebrochen den sich bildenden Papiertubus mit ebenfalls abgebrochenem Füllrohr im Tubus und der außerhalb befindlichen Laserstrahlungsquelle mit Lichtleitkabel,
- Figur 5: eine Vorderansicht des Tubus der Figur 4 von der offenen Vorderseite,
- Figur 6: eine Draufsicht auf Figur 5 bzw. Figur 4,
- Figur 7: die Einzelheit des Kreises VII in Figur 6,
- Figur 8: eine Schnittdarstellung durch den Tubus der Figur 5 entlang der Linie VIII-VIII,
- Figur 9: abgebrochen die Einzelheit IX in Figur 8 in vergrößertem Maßstab,
- Figur 10: eine ähnliche Darstellung wie Figur 5 mit Blickrichtung auf den offenen Tubus,
- Figur 11: die Draufsicht auf den Tubus der Figur 10,
- Figur 12: die Einzelheit XII in Figur 11 in größerem Maßstab,
- Figur 13: die schematisch dargestellten Winkel zwischen dem Ende der Lichtleitfaser und der Auftreffstelle des Laserlichtes auf die eine Papierbahn, und
- Figur 14: ein Diagramm zur Darstellung der in die Fügestelle eingebrachten Energie.

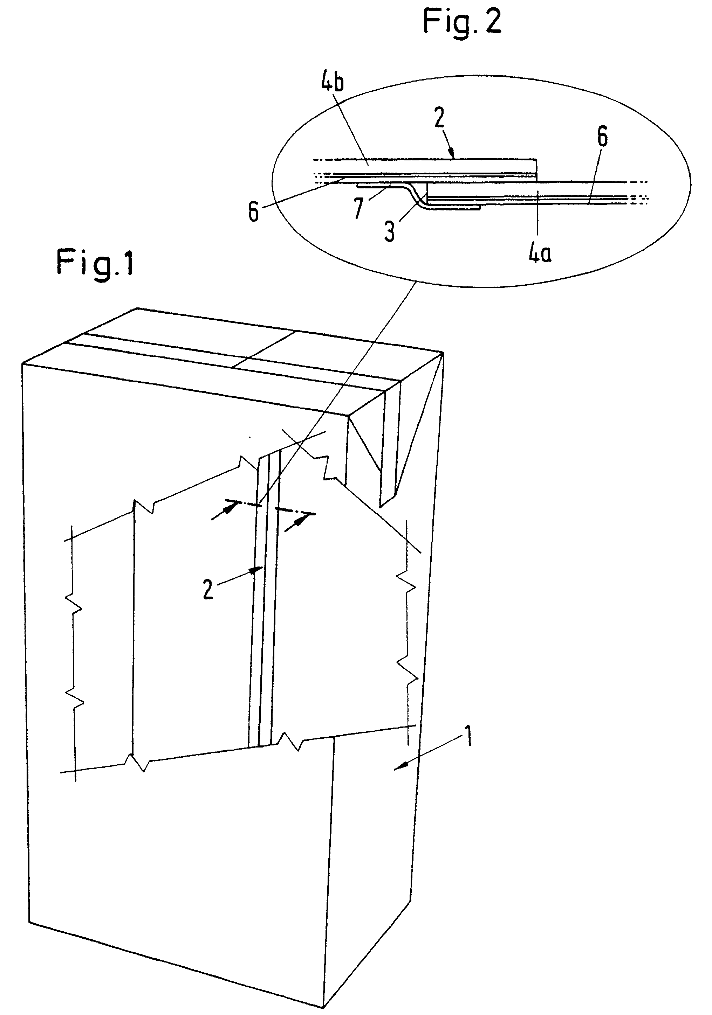

Bei dem in den Figuren hier dargestellten, bevorzugten Ausführungsbeispiel sollen mit Kunststoff beschichtete Materialbahnen so gefaltet und verschweißt werden, daß sich die in Figur 1 allgemein mit 1 bezeichnete quaderförmige Flüssigkeitspackung ergibt. Von den vier rechteckförmigen Seitenwänden sind die vorderen beiden Felder herausgebrochen, damit der Betrachter die Längssiegelnaht 2 sieht, deren Schnittebene in Richtung der dargestellten Pfeile liegt und mit der Papierebene der Figur 2 zusammenfällt. Man erkennt in Figur 2, daß über den linken Rand 3 der innen liegenden Seitenwand 4a der Rand der außen liegenden Seitenwand 4b aufgesiegelt wird. Die Innere Oberfläche der laminatförmigen Verpackungsmaterialbahn 5 ist mit Kunststoff 6 beschichtet, zum Beispiel Polyethylen. Ein Kantenschutzstreifen 7, der zum Beispiel ebenfalls aus einer Polyethylenfolie besteht, ist auf der Innenseite der Packung in der schematisiert gezeichneten Weise der Figur 2 aufgesiegelt. Dieses Versiegeln oder Verschweißen und auch das der beiden Randbereiche der Verpackungsmaterialbahn 5 zur Bildung der Seitenwände 4a, 4b erfolgt mittels Laserstrahlung, wie nachfolgend erläutert wird.

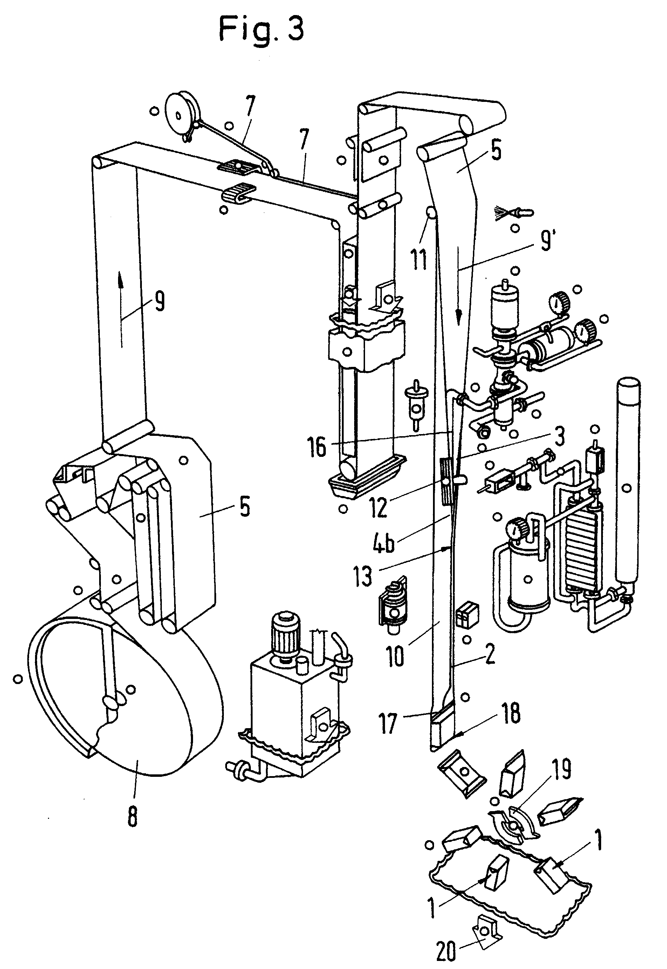

Um die Applikationsstelle und den Zweck der Aufbringung von Schweißenergie besser verständlich zu machen, wird das teilweise an sich bekannte Herstellungssystem kurz anhand Figur 3 erläutert. Von einer Vorratsrolle 8 wird die Verpackungsmaterialbahn 5 in Förderrichtung gemäß Pfeil 9 (Förderrichtung) zunächst in eine Bearbeitungsstation geführt, bei welcher der Kantenschutzstreifen 7 an den Rand 3 der Materialbahn 5 angesiegelt wird. Nach Durchlaufen weiterer Behandlungsstationen erfolgt in der abstromseitigen Vertikalen die Bildung des Materialtubus, der hier auch Papiertubus 10 genannt ist, denn es handelt sich bei dem Trägermaterial für die zu versiegeinden oder zu verschweißenden Kunststoffe um Papier. Die Materialbahn 5 verläßt an der oberen Umlenkrolle 11 in Richtung des vertikal nach unten zeigenden Pfeiles, Förderrichtung 9', die Gestalt der ebenen Bahn, wobei über Stützrollen, bewegliche Stützen und Formringe, die hier nicht gezeigt sind, die Bahn 5 allmählich in runde Form kommt, wie man auch in den Figuren 3 bis 5 und 10 deutlich sehen kann. Bei älteren Maschinen erfolgt die Erwärmung wenigstens eines Randes 3 über Heißluftdüsen 12, wie in Figur 3 gezeigt ist, oder im Falle der Ausführungsform nach der Erfindung direkt an der Auftreff- bzw. Fügestelle 13, bei welcher zwischen einer Druckrolle 14 und einer Gegendruckrolle 15 die zwei Bahnstücke zusammengewalzt werden, bis sie die schematisch dargestellte Verbindung gemäß Figur 2 erhalten haben.

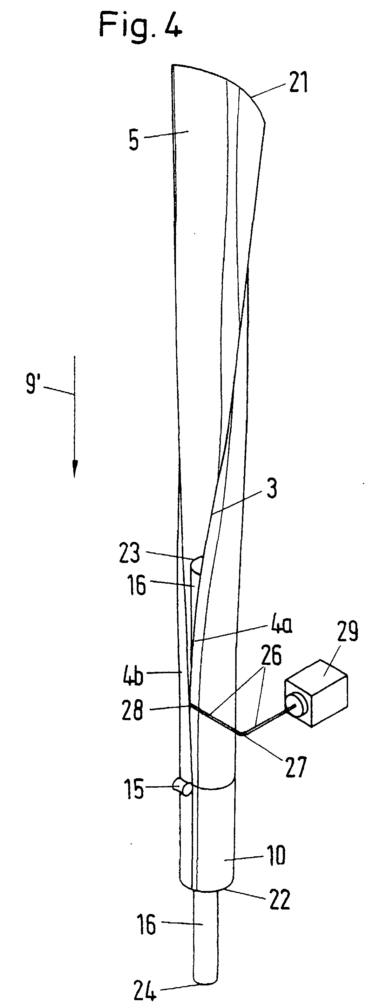

In den offenen Schlitz des Tubus 10 wird ein Füllrohr 16 von oben nach unten in den sich bildenden Tubus gesteckt. Dadurch wird der im unteren Bereich durch die Längssiegelnaht 2 geschlossene Papiertubus 10 mit der abzufüllenden Flüssigkeit gefüllt. Nicht dargestellte Siegelbacken haben zuvor die Quersiegelnaht 17 erstellt, auf welcher die Flüssigkeit ruht, bis auf der in Förderrichtung 9' darüber im Abstand die zweite Quersiegelnaht und damit die Verpackung 1 verschlossen wird. Nach dem Abtrennen bei 18 der beidseitig verschlossenen Packung wird diese entsprechend der gebogenen Pfeile 19 auf einem Bearbeitungsrad in verschiedene Behandlungsstationen geführt, in denen die Packung 1 ausgeformt wird, um die in Figur 3 unten gezeigte Quadergestalt zu erhalten. Von dort wird die fertige Packung 1 gemäß Pfeil 20 vertikal abgeführt. Zur Erläuterung des erfindungsgemäßen Verfahrens zum Verschweißen der Materialien mittels Laserstrahlung wenden wir uns jetzt den Figuren 4 bis 13 zu. Man erkennt mehr oder weniger die oben bei 21 abgebrochene und schon teilweise gekrümmte Verpackungsmaterial- oder Papierbahn 5, welche durch nicht dargestellte Rollen und Formringe bei ihrem in Förderrichtung 9' weiteren Fortschreiten zum Papiertubus 10 geformt wird. Dieser ist unten bei 22 abgebrochen. Tatsächlich muß man ihn sich im Sinne der Figur 3 bis zur Stelle 18 (Abtrennen) fortgesetzt vorstellen.

Ähnlich ist auch das Füllrohr 16 in Förderrichtung 9' oben (hinten) bei 23 und unten (in Förderrichtung 9' vorn) bei 24 abgebrochen.

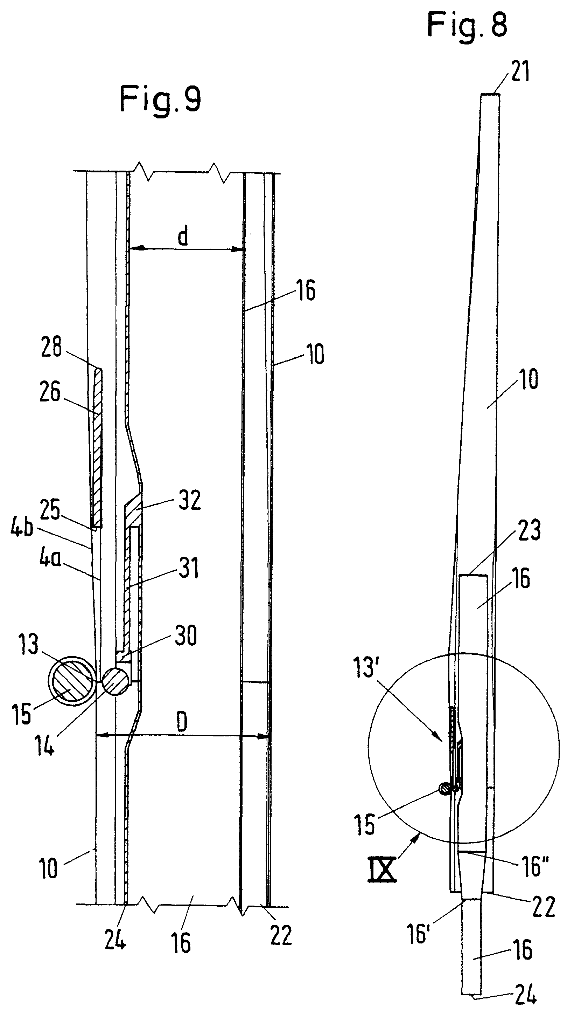

Die Auftreff-, Fuge- oder Schweißstelle 13 liegt unmittelbar in dem Spalt über der Druckrolle 14 und der Gegendruckrolle 15. Hier liegen die Ränder der Seitenwände 4a und 4b das erste Mal gerade direkt übereinander, um dann dem Walzprozeß zwischen den Druckrollen 14 und 15 ausgesetzt zu werden. Deshalb erscheint zum Beispiel in der Darstellung der Figur 9 der Papiertubus 10 unterhalb des Walzenspaltes als ein Strich, während oberhalb der eine Rand der Seitenwand 4a durch den inneren, rechten Strich und entsprechend die andere Seitenwand durch den linken Strich 4b veranschaulicht ist. Dazwischen befindet sich das abstromseitige, untere Ende 25 des Lichtwellenleiters 26, der auch als Lichtleitkabel oder Glasfaserbündel bezeichnet werden kann. Dieser Lichtwellenleiter 26 verläuft von seinem abstromseitigen unteren Ende 25 zunächst ein Stück weit entgegen der Förderrichtung 9' des Papiertubus 10 nach oben, biegt dann bei 28 in die Horizontale und noch einmal bei 27 so ab, daß er dann in die Laserstrahlungsquelle 29 gelangt. Bei dieser Quelle handelt es sich um eine nicht näher dargestellte Gruppe von nebeneinander angeordneten Diodenlasern.

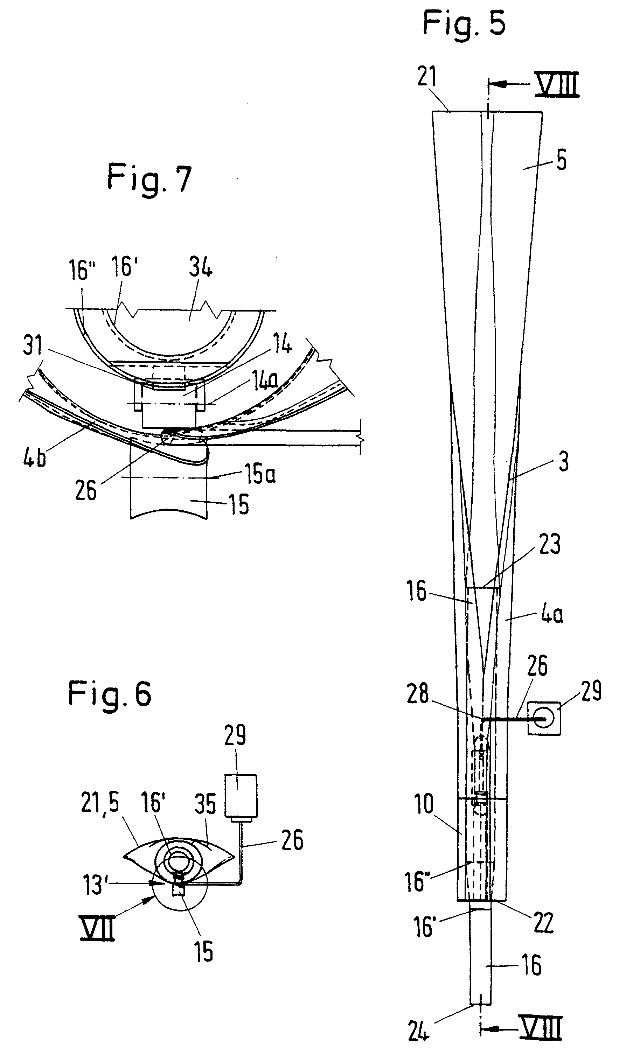

In der in den Figuren 6 und 8 innerhalb der Kreise VII und IX gezeigten Bereiche befindet sich die allgemein mit 13' bezeichnete Fügezone, in welcher die Auftreffstelle 13 zwischen der Druckrolle 14 und der Gegendruckrolle 15 liegt.

In den Figuren 7 und 9 erkennt man, daß beide Druckrollen 14 und 15 um die Achsen 14a (Drehachse der Druckrolle) bzw. 15a (Drehachse der Gegendruckrolle 15) drehbar gelagert sind. Während die Drehachse 15a der Gegendruckrolle 15 stationär fest ist, ist die Drehachse 14a der Druckrolle 14 in der Halterung 30 (Figur 9) federnd vorgespannt dadurch gelagert, daß die Halterung 13 ihrerseits am Ende einer Blattfeder 31 befestigt ist, die oben etwa in der Höhe des Endes 25 des Lichtwellenleiters 26 über die Aufnahme 32 am Füllrohr 16 befestigt ist. Das Füllrohr 16 hat im Bereich der Fügezone 13' die im Querschnitt in den Figuren 8 und 9 sichtbare Ausnehmung in Form einer seichten Eindellung, um die Druckrolle 14 mit ihrer Halterung 30 beweglich in dem Ringraum zwischen dem Füllrohr 16 und dem Papiertubus 10 zu stützen.

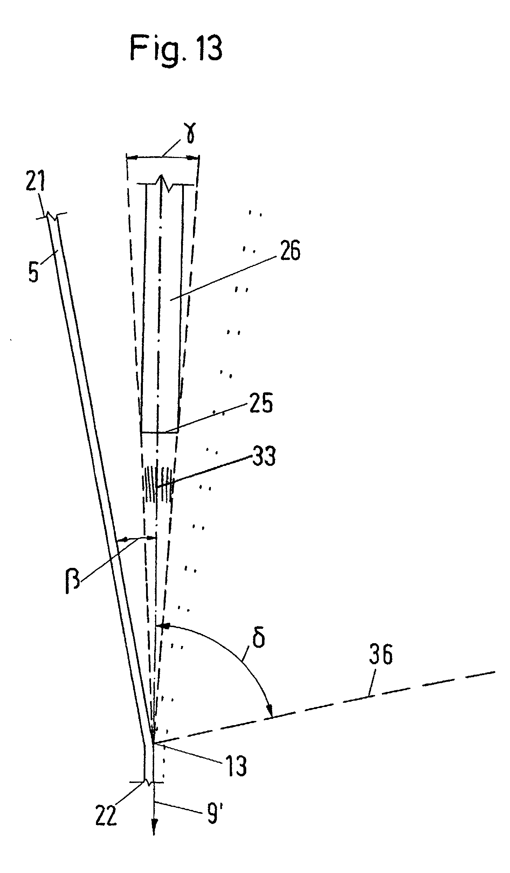

Wenn es sich bei der Packung 1 um eine der bekannten 1-Liter Flüssigkeitsverpackungen handelt, dann kann bei einer bevorzugten Ausführungsform der Durchmesser d des Füllrohres 16 an seiner breitesten Stelle knapp 80 mm betragen. Der Durchmesser D des Tubus liegt dann unterhalb der Druckrolle 14 bei knapp 100 mm. Die Blattfeder 31 hat zwischen ihrer Aufnahme 32 und der Höhe der Drehachse 14a der Druckrolle 14 eine Länge von 5 mm bis 30 mm, vorzugsweise 10 mm bis 25 mm und ganz speziell bei einem Beispiel 18 mm. Ähnliche Länge ergibt sich zwischen der Auftreffstelle 13 der Laserstrahlung 33 (abstromseitig, unten) und dem Ende 25 des Lichtwellenleiters 26 (aufstromseitig, oben). Mit anderen Worten hängt die Lage oder Höhe des Endes 25 des Lichtwellenleiters 26 von der Art des Papiertubus 10 und damit von dem Einstrahlwinkel β (Figur 13) der Laserstrahlung 33 auf die Papierbahn 5 ab. In der Praxis schiebt man den Lichtwellenleiter 26 mit seinem abstromseitigen Ende 25 so weit nach unten in Richtung auf die Auftreffstelle 13 zu wie möglich, ohne daß eine Verklemmung oder störende Berührung mit den seitlichen Papierbahnen 5 erfolgt. In der Praxis hat der Winkel 2β, unter welchem die beiden Materialbahnen 5 zueinander laufen, die Größe von etwa 2°.

Die Laserstrahlung 33 tritt aus dem abstromseitigen Ende 25 des Lichtwellenleiters 26 in Förderrichtung 9' der Papierbahn 5 aus und erhitzt beide aufeinanderzuwalzende Polyethylenoberflächen der Materialbahn 5. Die zur Erweichung der Polyethylenschicht erforderliche Energie kann in der eingangs beschriebenen Weise in sehr kurzer Zeit an der Auftreffstelle 13 eingebracht werden, so daß dann die Druckwalze 14 in Wechselwirkung mit der Gegendruckwalze 15 die beiden Bahnränder zusammenwalzt.

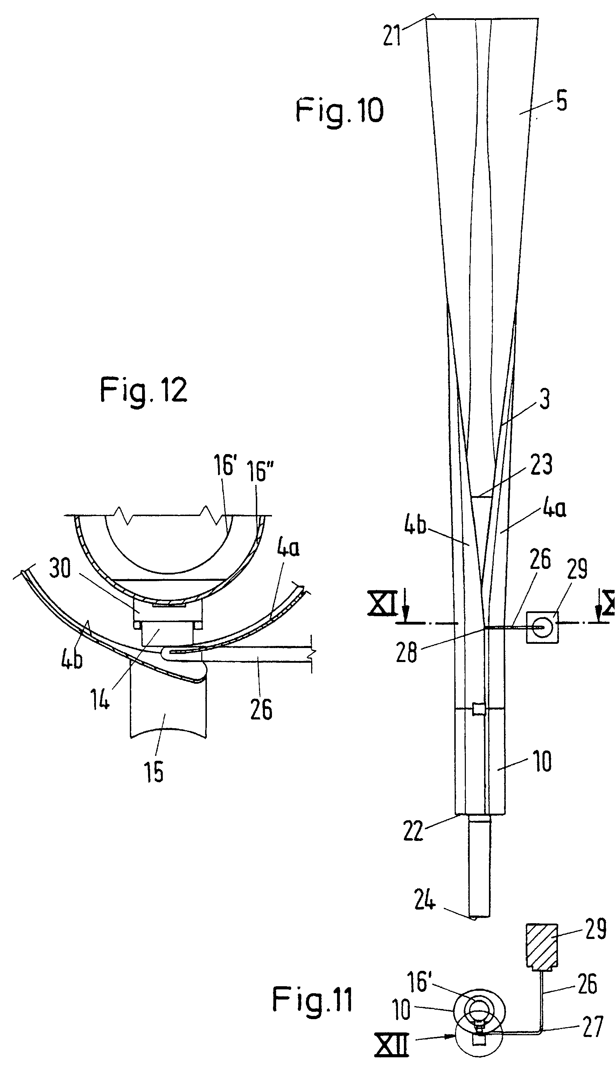

In den Figuren 7 und 12 blickt man in Förderrichtung 9' der Papierbahn 5. Man blickt innen in das offene Loch 34 des Füllrohres 16 und erkennt von diesem radial nach außen fortschreitend die innere Biegekante 16', gefolgt von der Außenwandung mit dem gleichen Radius wie von der äußeren Biegekante 16" an nach oben.

In Figur 6 sind die verschiedenen Linien innerhalb der Bruchkante 21 der Papierbahn 5 Knicklinien, zum Beispiel die Knicklinie 35.

Der Lichtwellenleiter 26 ist bei der besonderen Ausführungsform hier als Flachfaserbündel ausgestaltet und kann eine Länge von bis zu 10 m haben, da die Verluste innerhalb des Lichtwellenleiters 26 gering sind.

Figur 13 definiert die verschiedenen Winkel. Neben dem schon erwähnten Einstrahlwinkel β zwischen der Achse des Laserstrahls 33, die mit der Förderrichtung 9' der Papierbahn 5 in diesem Bereich zusammenfällt, und der Papierbahn 5 erkennt man oben auch den Öffnungswinkel γ der Laserstrahlung 33. Der Einfallswinkel ist rechts unten mit δ bezeichnet. Die der mit ausgezogenen Linien gezeigten Papierbahn 5 gegenüberliegende Papierbahn ist nur durch eine Linie von Doppelpunkten angedeutet. Die gestrichelte Linie 36 rechts unten in Figur 13 steht unter einem Winkel von 90° auf der Linie der Papierbahn 5.

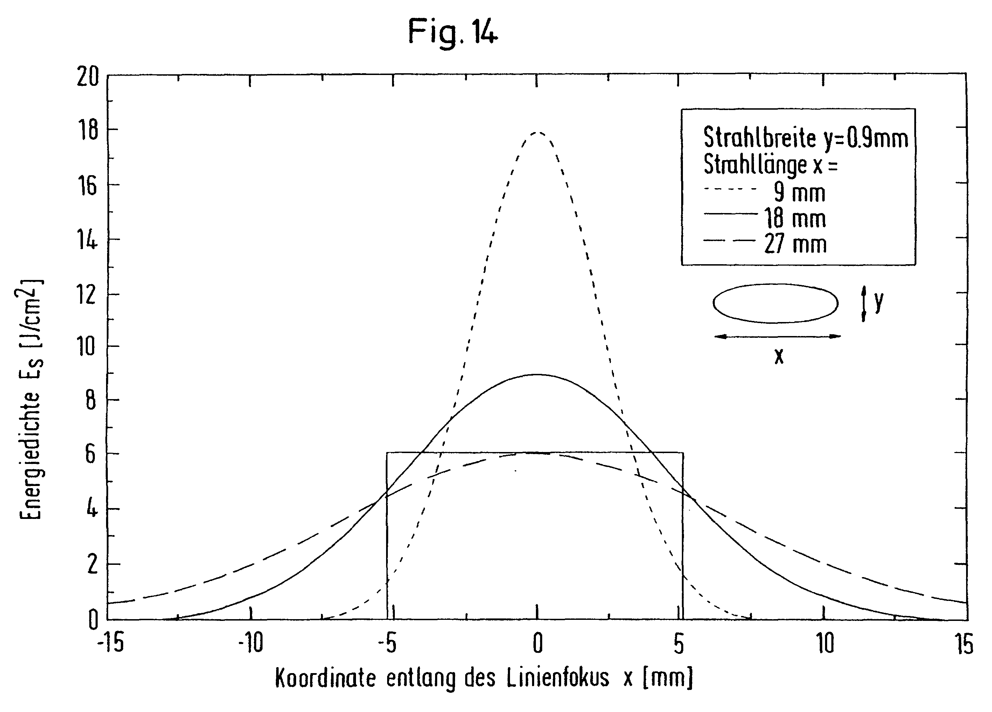

In Figur 14 sind die oben in Verbindung mit Seite 8 beschriebenen Gauß'schen Kurven für drei unterschiedliche Strahllängen x dargestellt. Über der Koordinate entlang des Linienfokus x[mm] ist die Energiedichte Eₛ [J/cm²] aufgetragen. Die Fläche unter dem eingezeichneten Rechteck, symmetrisch zum Nullpunkt gezeichnet, stellt diejenige Energie dar, welche durch die Laserstrahlung 33 an der Auftreffstelle 13 zum Verschweißen eingebracht wird bzw. werden kann.

### Bezugszeichenliste

- 1: quaderförmige Flüssigkeitspackung
- 2: Längssiegelnaht
- 3: linker Rand der Seitenwand
- 4a: innenliegende Seitenwand
- 4b: außenliegende Seitenwand
- 5: Verpackungsmaterialbahn
- 6: Kunststoffbeschichtung
- 7: Kantenschutzstreifen
- 8: Vorratsrolle
- 9: Pfeil (Förderrichtung)
- 9': Förderrichtung
- 10: Papiertubus
- 11: Obere Umlenkrolle
- 12: Heißluftdüsen
- 13: Auftreff-Fügestelle
- 13': Fügezone
- 14: Druckrolle
- 14a: Drehachse der Druckrolle
- 15: Gegendruckrolle
- 15a: Drehachse der Gegendruckrolle
- 16: Füllrohr
- 16': innere Biegekante
- 16": äußere Biegekante
- 17: Quersiegelnaht
- 18: Abtrennen
- 19: gebogene Pfeile (Richtung zu den Behandlungsstationen der Packung 1)
- 20: Pfeil (vertikale Richtung)
- 21: obere Abbrechstelle der teilweise gekrümmten Materialbahn
- 22: untere Abbrechstelle des Papiertubus 10
- 23: obere Abbrechstelle des Füllrohres
- 24: untere Abbrechstelle des Füllrohres
- 25: unteres Ende des Lichtwellenleiters
- 26: Lichtwellenleiter
- 27: Abbiegestelle des Lichtwellenleiters
- 28: horizontales Abbiegen des Lichtwellenleiters
- 29: Laserstrahlungsquelle
- 30: Halterung
- 31: Blattfeder
- 32: Aufnahme am Füllrohr
- 33: Laserstrahlung
- 34: offenes Loch des Füllrohres
- 35: Knickstelle
- 36: gestrichelte Linie
- d: Durchmesser des Füllrohres
- D: Durchmesser des Tubus
- β: Einstrahlwinkel
- γ: Öffnungswinkel
- δ: Einfallswinkel

## Patentansprüche

1. Verfahren zum Verschweißen von laminatförmigen Verpackungsmateriatien (4a, 4b, 5), die auf den miteinander zu verschweißenden Oberflächen Kunststoff (6) aufweisen, ohne Berührung der Oberflächen mit Schweißwerkzeugen unter Verwendung von Laserstrahlung (33) als Schweißenergie, wobei die zu verschweißenden Oberflächen als Materialbahnen (4a, 4b, 5) relativ zu der ortsfesten Auftreffstelle (13) der Laserstrahlung (33) auf die wenigstens eine Materialbahn (4a, 4b, 5) bewegt werden, **dadurch gekennzeichnet, daß** die Laserstrahlung (33) eine kontinuierliche Ausgangsleistung hat, daß die Materialbahnen Verpackungsmaterialbahnen (4a, 4b, 5) sind, für die Erzeugung der Laserstrahlung (33) zum Verschweißen der Verpackungsmaterialien (4a, 4b, 5) wenigstens ein und vorzugsweise eine Gruppe von nebeneinander angeordneten Diodenlasern eingesetzt wird und die Laserstrahlung (33) dem Verpackungsmaterial (4a, 4b, 5) als Freistrahl mittels fester Optik über Fenster und/oder mittels Lichtwellenleiter (26) zugeführt wird.

2. Verfahren nach Anspruch 1, **dadurch gekennzeichnet, daß** der Laserstrahl (33) unter einem Einfallswinkel δ ≠ 0° auf die wenigstens eine Oberfläche des Verpackungsmaterials (4a, 4b, 5) auftrifft.

3. Verfahren nach Anspruch 1 oder 2, **dadurch gekennzeichnet, daß** der Einfallswinkel (δ) im Bereich von 45° bis 84°, vorzugsweise im Bereich von 75° bis 83° und ganz besonders bevorzugt bei 81° liegt.

4. Verfahren nach einem der Ansprüche 1 bis 3, **dadurch gekennzeichnet, daß** die Leistungsverteilung im Strahlquerschnitt um den Mittelpunkt der an der Auftreffstelle (13) abgebildeten Linie asymmetrisch ist.

5. Verfahren nach einem der Ansprüche 1 bis 4, **dadurch gekennzeichnet, daß** die Leistungsverteilung im Strahlquerschnitt rechteckförmig ist.

6. Verfahren nach einem der Ansprüche 1 bis 5, **dadurch gekennzeichnet, daß** die Temperatur in der Fügezone (13') erfaßt und damit die Laserleistung ausgesteuert wird.

7. Verfahren nach einem der Ansprüche 1 bis 6, **dadurch gekennzeichnet, daß** die Steuerung der Laserleistung mit Hilfe der Steuerung der Vorschubgeschwindigkeit erfolgt.

## Claims

1. A method of welding packaging materials (4a, 4b, 5) in laminate form, which have plastic material (6) on the surfaces which are to be welded together, without touching the surfaces with welding tools, using laser radiation (33) as the welding energy, wherein the surfaces to be welded are moved in the form of webs of material (4a, 4b, 5) relative to the stationary location of impingement (13) of the laser radiation (33) on the at least one web of material (4a, 4b, 5), **characterised in that** the laser radiation (33) has a continuous output power, that the webs of material are webs of packaging material (4a, 4b,5), at least one and preferably a group of mutually juxtaposed diode lasers is used for producing the laser radiation (33) for welding the packaging materials (4a, 4b, 5) and the laser radiation (33) is supplied to the packaging material (4a, 4b, 5) in the form of a free beam by means of fixed optical means by way of windows and/or by means of optical waveguides (26).

2. A method according to claim 1 **characterised in that** the laser beam (33) impinges at an angle of incidence δ ≠ 0° on the at least one surface of the packaging material (4a, 4b, 5).

3. A method according to claim 1 or claim 2 **characterised in that** the angle of incidence (δ) is in the range of 45° to 84°, preferably in the range of 75° to 83° and quite particularly preferably it is 81°.

4. A method according to one of claims 1 to 3 **characterised in that** the power distribution in the beam cross-section is asymmetrical about the centre point of the line of which the image is formed at the impingement location (13).

5. A method according to one of claims 1 to 4 **characterised in that** the power distribution in the beam cross-section is rectangular.

6. A method according to one of claims 1 to 5 **characterised in that** the temperature in the joining zone (13') is detected and the laser power is controlled therewith.

7. A method according to one of claims 1 to 6 **characterised in that** control of the laser power is effected by means of control of the speed of advance movement.

## Revendications

1. Procédé de soudure de matériaux d'emballage se présentant sous forme de stratifiés (4a, 4b, 5) qui comportent une matière plastique (6) sur les surfaces à soudées l'une à l'autre, sans que les surfaces soient en contact avec l'outil de soudage, en utilisant un faisceau laser (33) comme énergie de soudage, dans lequel les surfaces à souder se présentant sous la forme de bandes de matière (4a, 4b, 5) sont déplacées par rapport au point d'incidence fixe (13) du faisceau laser (33) sur l'au moins une bande de matière (4a, 4b, 5), **caractérisé en ce que** le faisceau laser (33) a une puissance de sortie continue, **en ce que** les bandes de matière sont des bandes de matière d'emballage (4a, 4b, 5), **en ce qu'**il est utilisé au moins une diode laser, avantageusement un groupe de diodes laser disposées les unes à côté des autres, pour générer le faisceau laser (33) en vue de souder les matériaux d'emballage (4a, 4b, 5), et **en ce que** le faisceau laser (33) est amené à la matière d'emballage (4a, 4b, 5) sous forme de faisceau libre au moyen d'un dispositif optique fixe au-dessus d'une fenêtre et/ou au moyen de guides d'ondes lumineuses (26).

2. Procédé selon la revendication 1, **caractérisé en ce que** le faisceau laser (33) est incident à l'au moins une surface du matériau d'emballage (4a, 4b, 5) avec un angle d'incidence δ ≠ 0°.

3. Procédé selon la revendication 1 ou 2, **caractérisé en ce que** l'angle d'incidence (δ) est compris entre 45° et 84°, avantageusement entre 75° et 83°, et tout particulièrement est de préférence égal à 81°.

4. Procédé selon l'une des revendications 1 à 3, **caractérisé en ce que** l'énergie dans la section du faisceau est distribuée de façon asymétrique autour de la ligne médiane passant par le point d'incidence (13).

5. Procédé selon l'une des revendications 1 à 4, **caractérisé en ce que** l'énergie dans la section du faisceau est distribuée dans un rectangle.

6. Procédé selon l'une des revendications 1 à 5, **caractérisé en ce que** l'on détecte la température dans la zone de fusion (13') en vue de régler la puissance du laser.

7. Procédé selon l'une des revendications 1 à 6, **caractérisé en ce que** la puissance du laser est commandée par le dispositif de commande de la vitesse de progression.
